# FASCICULE DE BREVET EUROPEEN

(11) **EP 3 569 858 B1**
(45) Date de publication et mention de la délivrance du brevet: **23.06.2021**
(21) Numéro de dépôt: 19173808.7
(22) Date de dépôt: 10.05.2019
(51) Int. Cl.: F02K 9/72, F02K 9/94

(54) **MOTEUR FUSÉE SOLIDE-HYBRIDE AMÉLIORÉ**
VERBESSERTER FESTSTOFF-HYBRID-RAKETENMOTOR
IMPROVED SOLID-HYBRID ROCKET ENGINE

(30) Priorité: 16.05.2018 FR 1854088
(43) Date de publication de la demande: 20.11.2019
(73) Titulaire: ArianeGroup SAS, 75015 Paris (FR)
(72) Inventeur: COLAS, Stéphane, 27207 Vernon Cedex (FR)
(74) Mandataire: Cabinet Beau de Loménie

(56) Documents cités:
- US-A- 3 286 471
- US-A- 6 016 652
- US-A1- 2009 217 525

## Description

### DOMAINE DE L'INVENTION

Le présent exposé concerne le domaine des moteurs fusées, et plus précisément l'allumage et la propulsion des moteurs fusées, et un procédé d'utilisation de bloc de carburant pour de tels moteurs fusées.

### ETAT DE LA TECHNIQUE ANTERIEURE

La propulsion des lanceurs spaciaux peut être effectuée par différents moyens. On connaît plusieurs types de moteurs fusées utilisant des techniques de propulsion différentes, notamment les moteurs à propergol solide, les moteurs à ergols liquides, et les moteurs à propulsion hybride.

Les moteurs à propergol solide peuvent être facilement stockés, et permettent de produire une forte poussée. En revanche, ils ne sont pas rallumables et pas réutilisables, et la poussée ne peut pas être contrôlée. Les moteurs à ergols liquides permettent un rallumage du moteur et permettent la régulation de la poussée. Néanmoins, ils sont très couteux et nécessitent des moyens complexes de mise en œuvre et de préparation au lancement. Dans les moteurs à propulsion hybride, la combustion du carburant solide est assurée par l'injection d'un oxydant liquide ou gazeux sous pression stocké dans un réservoir. Ils combinent des qualités des moteurs solides, telles que facilité et rapidité de mise en œuvre, coût et niveau de poussée, à certaines qualités des moteurs liquide, comme la capacité de rallumage et de régulation de la poussée. Leur utilisation reste cependant limitée. En effet, ils ne permettent pas un allumage homogène et conduisent à des géométries internes complexes limitant le taux de chargement. US 6 016 652 décrit un exemple de moteur à propulsion hybride.

Il existe un besoin pour un dispositif permettant de pallier les inconvénients cités ci-dessus, et permettant notamment un allumage homogène, une poussée élevée au décollage et une poussée de croisière contrôlable, tout en étant peu couteux et présentant une mise en œuvre simple.

### PRESENTATION DE L'INVENTION

Le présent exposé concerne un moteur fusée tel que défini dans la revendication 1, comprenant :
- une chambre de combustion débouchant sur une tuyère,
- au moins un bloc de propergol solide disposé dans la chambre de combustion, le bloc de propergol solide comprenant un carburant solide et un comburant solide,
- au moins un injecteur configuré pour injecter un comburant fluide dans la chambre de combustion,
- un organe de régulation pour réguler le débit d'injection de comburant fluide dans la chambre de combustion.

Le bloc de propergol solide peut comporter un carburant sous la forme d'une phase polymérisée, dans laquelle un comburant sous la forme de grains solides se trouve. Le comburant, en d'autres termes l'oxydant, est configuré de telle sorte qu'après allumage à l'aide d'un allumeur, il réagisse chimiquement avec le carburant solide, entraînant la combustion du bloc de propergol solide. Le fait que le bloc de propergol solide comporte initialement, en plus d'un carburant solide, un comburant solide, permet de faciliter l'allumage en limitant la quantité d'énergie nécessaire à ce dernier, et d'uniformiser l'allumage du bloc sur toute sa surface. Par ailleurs, cela permet une meilleure réactivité et une meilleure stabilité vis-à-vis des variations de débit d'injection d'un comburant fluide.

L'injecteur permet en outre d'injecter un comburant fluide dans la chambre de combustion. L'injection d'un comburant fluide, en plus du comburant solide déjà présent dans le bloc de propergol solide, permet d'intensifier la combustion du bloc, et ainsi d'augmenter le niveau de poussée du moteur. Plus précisément, l'organe de régulation permet de réguler le débit d'injection, et donc de réguler le niveau de poussée du moteur en fonction du débit d'injection du comburant fluide. Ainsi, à partir d'un niveau de poussée initial assuré par la présence du comburant solide dans le bloc de propergol solide, il est possible, en faisant varier le débit d'injection de comburant fluide, d'atteindre et de réguler la poussée du moteur de manière optimale suivant le profil souhaité de la mission. Par exemple, pour un étage inférieur, une forte poussée est nécessaire au décollage, une poussée réduite est nécessaire en phase atmosphérique pour limiter la pression dynamique maximum, et une régulation de la poussée est nécessaire pour permettre un retour avec atterrissage vertical. Par ailleurs, pour un étage supérieur, la précision de l'injection de la charge utile est accrue par rapport à un étage solide classique, grâce à la régulation de la poussée. Dans le cas d'une éjection d'un équipage en phase de décollage, cette régulation permet également d'assurer une forte poussée pour s'extraire du lanceur, puis un régime de croisière pour éloigner l'équipage.

Dans certains modes de réalisation, le taux de comburant solide dans le bloc de propergol solide est déterminé de manière à ce que, après allumage du moteur, la combustion du bloc de propergol solide soit auto-entretenue sans injection supplémentaire de comburant fluide dans la chambre de combustion.

En d'autres termes, le taux de comburant solide dans le bloc de propergol solide est supérieur à une valeur seuil permettant l'auto-entretien de la combustion du bloc de propergol après allumage, cette combustion pouvant se poursuivre sans apport supplémentaire nécessaire de comburant fluide. Cette configuration permet d'assurer une poussée de base du moteur, dont la valeur peut être augmentée et régulée par apport de comburant fluide par l'intermédiaire de l'injecteur et de l'organe de régulation.

Dans certains modes de réalisation, le taux de comburant solide dans le bloc de propergol solide est déterminé de manière à ce que, après allumage du moteur, la combustion du bloc de propergol solide ne soit pas auto-entretenue sans injection supplémentaire de comburant fluide dans la chambre de combustion.

En d'autres termes, le taux de comburant solide dans le bloc de propergol solide est inférieur à une valeur seuil permettant l'auto-entretien de la combustion du bloc de propergol après allumage, cette combustion ne pouvant pas se poursuivre sans apport supplémentaire de comburant fluide. Cette configuration permet de pouvoir arrêter la combustion, et donc la propulsion du moteur lorsque cela est souhaité ou nécessaire, avant que tout le bloc de propergol solide ne soit consumé. Par ailleurs cette configuration permet d'assurer un niveau de poussée minimal associé à un débit minimal de comburant fluide, dont l'augmentation et la variation de débit permet d'atteindre ou de réguler la poussée de manière optimale suivant le profil de mission.

Dans le présent exposé, ledit bloc de propergol solide forme un premier bloc, le moteur comprenant en outre :
- un deuxième bloc de propergol solide disposé dans la chambre de combustion de telle sorte à définir une cavité débouchant sur la tuyère,
- le premier bloc étant encapsulé entre une paroi interne de la chambre de combustion et le deuxième bloc de propergol solide.

Par « encapsulé », on comprend que le deuxième bloc de propergol solide forme, avec la paroi interne de la chambre de combustion, un espace clos dans lequel se trouve le premier bloc de propergol solide. Ainsi, ce dernier est protégé par le deuxième bloc, de telle sorte que lorsque le deuxième se consume après allumage, le premier bloc n'est pas affecté par la combustion de deuxième bloc. En effet, le premier bloc ne se découvre que lorsque la combustion du deuxième bloc est terminée. Ainsi, le profil initial de la surface du premier bloc de propergol solide est préservé de l'agression due aux gaz chauds et érosifs du deuxième bloc.

Dans certains modes de réalisation, le taux de comburant dans le deuxième bloc de propergol solide permet l'auto-entretien de la combustion, sans injection de comburant fluide. La présence du deuxième bloc permet ainsi d'assurer un niveau de poussée initial en fixant un taux de comburant solide dans le deuxième bloc, puis, lorsque la combustion du deuxième bloc est terminée, et que la combustion du premier bloc a débutée, de pouvoir réguler le niveau de poussée en fonction du débit d'injection de comburant fluide.

Dans le présent exposé, le taux de comburant solide dans le premier bloc de propergol solide est différent du taux de comburant solide dans le deuxième bloc de propergol solide.

Par exemple, par l'adjonction d'un taux de comburant plus important dans le deuxième bloc de propergol solide que dans le premier bloc de propergol solide, il est possible d'assurer une poussée initiale importante, pouvant être nécessaire au décollage. Par ailleurs, par l'adjonction d'un taux de comburant solide dans le premier bloc inférieur au taux de comburant solide dans le deuxième bloc, il est possible, lorsque la combustion du deuxième bloc est terminée, et que la combustion du premier bloc a débutée, d'obtenir un niveau de poussée minimal pouvant être augmenté ou régulé en fonction du débit d'injection du comburant fluide.

Dans le présent exposé, le deuxième bloc de propergol solide est disposé de telle sorte à obturer le au moins un injecteur.

En d'autres termes, le au moins un injecteur n'est découvert que lorsque la combustion du deuxième bloc de propergol solide est terminée. Ainsi, l'injecteur est protégé par le deuxième bloc de propergol solide lui-même pendant la combustion de ce dernier. Cela permet d'éviter une dégradation du ou des injecteurs provoquée par la combustion du deuxième bloc, et ainsi de conserver un état de fonctionnement approprié pour leur utilisation lors de la combustion du premier bloc.

Dans certains modes de réalisation, le moteur fusée comporte un bouchon configuré pour empêcher des gaz de combustion du deuxième bloc de propergol solide de pénétrer dans l'injecteur, et pour être ouvert lorsqu'un comburant fluide est injecté à travers ledit injecteur.

Ce bouchon est configuré de telle sorte à obturer hermétiquement l'injecteur, de manière à ce que les gaz de combustion issus de la combustion du deuxième bloc ne puisse pénétrer dans l'injecteur et se mélanger au comburant fluide présent en amont de l'injecteur, pouvant détériorer le dispositif, notamment entraîner une dégradation thermique par fusion et/ou combustion du matériau de l'injecteur, ou une inflammation de gaz combustibles dans le dôme d'injection en amont de l'injecteur par contact avec l'oxydant à faible pression. Par ailleurs, ce bouchon est configuré pour pouvoir être éjecté lorsqu'une pression est exercée en amont de ce dernier, par exemple lorsqu'un comburant fluide est injecté par l'injecteur.

Dans certains modes de réalisation, le moteur fusée comporte un premier allumeur disposé dans la paroi de la chambre de combustion, le deuxième bloc de propergol solide étant disposé de telle sorte à recouvrir le premier allumeur, et un deuxième allumeur disposé dans la tuyère et communiquant avec la cavité à travers la tuyère.

Le deuxième allumeur permet d'allumer le deuxième bloc de propergol solide et d'initier la combustion de ce dernier. De même, le premier allumeur permet d'allumer le premier bloc de propergol solide et d'initier la combustion de ce dernier. En outre, le premier allumeur étant protégé par le deuxième bloc de propergol solide lui-même pendant la combustion de ce dernier, le premier allumeur ne peut pas être détérioré par les gaz chauds issus de la combustion du deuxième bloc.

Dans certains modes de réalisation, le deuxième allumeur est configuré pour être éjecté du moteur après allumage du deuxième bloc de propergol solide.

Dans le cas où le deuxième bloc de propergol solide est configuré de telle sorte que sa combustion soit auto-entretenue, aucun rallumage de celui-ci ne sera nécessaire. Le deuxième allumeur permet donc uniquement l'allumage initial du deuxième bloc, et est configuré pour être éjecté après cet allumage, par l'intermédiaire de la pression exercée par les gaz chauds générés par la combustion par exemple. L'absence du deuxième allumeur dans la tuyère après son éjection permet en outre de ne pas perturber la poussée du moteur.

Dans certains modes de réalisation, le moteur fusée comprend un canal d'alimentation configuré pour alimenter l'injecteur en comburant fluide sous forme liquide ou gazeuse, dans lequel le canal d'alimentation comporte un clapet anti-retour pour bloquer l'écoulement des gaz de combustion provenant de la chambre de combustion à travers le canal d'alimentation.

Le clapet anti-retour n'est ouvert que lorsque du comburant fluide doit être injecté. Cela permet d'empêcher les gaz de combustion issu de la combustion du premier bloc de propergol solide de se mélanger au comburant fluide stocké en amont, lors de la combustion du premier bloc de propergol solide, dans la phase de régulation de la poussée du moteur.

Dans certains modes de réalisation, le canal d'alimentation comporte une vanne de régulation disposée en amont du clapet antiretour, la vanne de régulation étant configurée pour réguler le débit d'injection de comburant fluide par l'injecteur.

Par « amont », on comprend à l'opposé de la chambre de combustion par rapport au clapet antiretour. La vanne de régulation permet notamment d'augmenter ou de diminuer le débit d'injection de comburant fluide dans la chambre de combustion, et ainsi de réguler la poussée du moteur.

Dans certains modes de réalisation, l'ouverture de la vanne de régulation est commandée par une unité de commande.

L'unité de commande peut être un calculateur commandant l'ouverture de la vanne de régulation en fonction de mesures effectuées dans le moteur fusée, par exemple la pression dans la chambre de combustion.

Le présent exposé concerne également un procédé d'utilisation d'un bloc de propergol solide tel que défini dans la revendication 9, le bloc de propergol solide comprenant un carburant solide et un comburant solide, le bloc de propergol solide étant disposé dans une chambre de combustion débouchant sur une tuyère, un comburant fluide étant injecté dans la chambre de combustion à un débit souhaité.

Le bloc de propergol solide peut être utilisé dans un moteur fusée. La présence de comburant solide dans le bloc de propergol solide permet un allumage uniforme de celui-ci. Le comburant fluide peut être injecté par l'intermédiaire d'un injecteur débouchant dans la chambre de combustion. L'injection d'un comburant fluide, en plus du comburant solide déjà présent dans le bloc de propergol solide, permet d'intensifier la combustion du bloc, et ainsi d'augmenter le niveau de poussée du moteur.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement une vue en coupe d'un moteur fusée selon un mode de réalisation.
- la figure 2 représente schématiquement une vue en coupe d'un moteur fusée selon un autre mode de réalisation.
- la figure 3 représente schématiquement une vue en coupe d'un moteur fusée selon encore un autre mode de réalisation.

### DESCRIPTION DETAILLEE D'EXEMPLES DE REALISATION

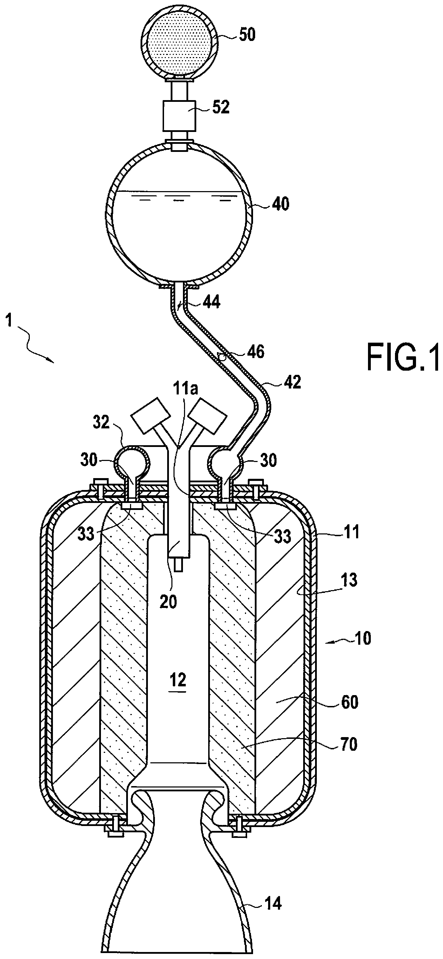

Un moteur fusée selon le présent exposé va être décrit en référence aux figures 1 à 3.

La figure 1 représente schématiquement un moteur fusée 1 selon un mode de réalisation de l'exposé. Le moteur fusée 1 comporte une chambre de combustion 10 comprenant une paroi 11 définissant une enceinte interne 12. Lors du fonctionnement du moteur, la combustion du carburant s'effectue dans l'enceinte interne 12 de la chambre de combustion 10. La chambre de combustion 10 comporte également une couche de protection thermique 13 sur la face interne de la paroi 11 de la chambre de combustion. Cette couche de protection thermique 13 peut comporter un élastomère du type polybutadiène déposé et polymérisé directement sur la face interne de la paroi 11. Cette protection thermique 13 peut également servir au collage du propergol à la paroi 11 et à la transmission optimale des efforts de pression à la paroi. La protection thermique 13 permet en outre de limiter les contraintes thermiques auxquelles la paroi 11 est soumise au cours et en fin de la combustion.

L'enceinte interne 12 débouche sur une tuyère 14, qui peut être orientable par rapport à la chambre de combustion 10.

Le moteur 1 comporte en outre un allumeur 20, pouvant comporter par exemple une bougie d'allumage et une torche, permettant d'initier la combustion au sein de l'enceinte interne 12 de la chambre de combustion 10. L'allumeur 20 permet également le rallumage du moteur, lorsque la combustion est arrêtée temporairement. Dans ce mode de réalisation, l'allumeur 20 est disposé de manière à être positionné au moins en partie dans l'enceinte interne 12, en passant à travers la paroi 11 de la chambre de combustion via un orifice d'allumage 11a présent dans ladite paroi, faisant ainsi saillie dans l'enceinte interne 12.

Par ailleurs, des injecteurs 30 sont également disposés au travers de la paroi 11 de la chambre de combustion 10, de manière à pouvoir injecter un comburant fluide dans l'enceinte interne 12. Les injecteurs 30 sont par exemple répartis autour de la partie de l'allumeur 20 faisant saillie dans l'enceinte interne 12, et sont alimentés en comburant fluide par un tore d'injection 32, disposé à l'extérieur de la chambre de combustion 10. En outre, l'extrémité des injecteurs 30 débouchant dans l'enceinte interne 12, est initialement obturée par des bouchons 33, empêchant un écoulement des gaz de combustion depuis la chambre de combustion 10 jusqu'au tore d'injection 32 lors du fonctionnement du moteur 1. Les bouchons 33 sont configurés pour pouvoir être éjectés lorsqu'une pression dépassant un seuil prédéterminé est exercée en amont de ces derniers, par exemple dans le tore d'injection 32.

Un réservoir 40 permet de stocker le comburant fluide, et d'alimenter le tore d'injection 32, et donc les injecteurs 30 en comburant fluide, via une canalisation d'alimentation 42, la canalisation d'alimentation 42 étant en communication fluidique avec le réservoir 40 et le tore d'injection 32.

Une vanne de régulation 44 est disposée dans la canalisation d'alimentation 42 en aval du réservoir, et un clapet antiretour 46 est disposé dans la canalisation d'alimentation 42 en aval de la vanne de régulation 44. Le terme « aval » est considéré suivant le sens d'écoulement du comburant fluide depuis le réservoir 40 jusqu'au tore d'injection 32. La vanne de régulation 44 permet de réguler le débit d'alimentation des injecteurs 30, en comburant fluide. Le clapet antiretour 46 permet l'écoulement du comburant fluide depuis le réservoir 40 jusqu'au tore d'injection 32, mais empêche l'écoulement du comburant fluide depuis le tore d'injection 32 jusqu'au réservoir 40. Le clapet antiretour 46 permet ainsi d'empêcher un retour des gaz de combustion depuis la chambre de combustion 10 jusqu'au réservoir 40 lors du fonctionnement du moteur 1.

Dans le mode de réalisation illustré sur la figure 1, le comburant fluide utilisé est sous forme liquide, par exemple un ergol liquide. Le réservoir 40 contenant le comburant liquide est pressurisé à l'aide d'une sphère de gaz pressurisant 50 adjacente au réservoir 40 et connectée à celle-ci par l'intermédiaire d'un détendeur 52. La sphère de gaz pressurisant 50 permet de réguler la pression au sein du réservoir 40, par l'intermédiaire du détendeur 52.

Par ailleurs, dans cet exemple, le moteur fusée 1 comporte deux blocs de propergol solide disposés dans l'enceinte interne 12 de la chambre de combustion 10. Un premier bloc de propergol solide 60 présente une forme sensiblement annulaire, et est disposé contre la face interne de la paroi 11, la protection thermique 13 étant prise en sandwich entre cette dernière et le premier bloc de propergol solide 60.

Un deuxième bloc de propergol solide 70 présente également une forme sensiblement annulaire, en étant plaqué contre le premier bloc de propergol solide 60. Le deuxième bloc de propergol solide 70 définit ainsi une cavité de l'enceinte interne 12 débouchant sur la tuyère 14. Par ailleurs, l'allumeur 20 fait saillie dans la cavité à travers le deuxième bloc de propergol solide 70. Bien que les blocs de propergol solide présentent une forme sensiblement annulaire dans cet exemple, d'autres formes peuvent être envisagées, comme c'est le cas en propulsion solide classique.

Suivant cette configuration, le premier bloc de propergol solide 60 est disposé de telle sorte à être encapsulé entre la face interne de la paroi 11 et le deuxième bloc de propergol solide 70. En d'autres termes, aucune surface du premier bloc de propergol solide 60 ne communique avec l'enceinte interne 12. En outre, le deuxième bloc de propergol solide 70 est disposé de manière à recouvrir les injecteurs 30, ces derniers étant initialement noyés dans le bloc. En d'autres termes, le deuxième bloc de propergol solide 70 constitue une barrière thermique pour le premier bloc de propergol solide 60, ainsi que pour les injecteurs 30, protégeant ces derniers des gaz de combustion lors de l'allumage du moteur 1 et de la combustion du deuxième bloc de propergol 70.

Le premier bloc de propergol solide 60 et le deuxième bloc de propergol solide 70 comportent un carburant solide et un comburant solide. Le carburant solide est sous la forme d'une phase polymérisée pouvant être du polybutadiène (PBHT), dans laquelle le comburant solide est sous la forme de grains solides répartis de manière uniforme dans la phase polymérisée.

Le procédé de fabrication des blocs peut consister à couler les deux blocs 60 et 70 successivement, directement dans l'enceinte du propulseur revêtue de sa protection thermique, en changeant de noyau interne pour la deuxième coulée. L'avantage de cette méthode est de choisir un degré de polymérisation optimal de la protection thermique puis du premier bloc 60, afin de garantir une parfaite adhérence aux différentes interfaces. Une autre méthode de fabrication des blocs peut comporter une première étape consistant à couler le premier bloc de propergol solide 60 dans un premier moule, et une deuxième étape, après la polymérisation du premier bloc, consistant à couler le deuxième bloc de propergol solide 70 dans un deuxième moule, plus petit que le premier moule. De manière alternative, les blocs de propergol solide peuvent être fabriqués par fabrication additive.

Le premier bloc de propergol solide 60 présente un taux de comburant solide, ou concentration en comburant solide, plus faible que celui du deuxième bloc de propergol solide 70. Dans cet exemple, le taux de comburant solide dans le deuxième bloc de propergol solide 70 est configuré de manière à ce que, après allumage du moteur par l'allumeur 20, la combustion du deuxième bloc de propergol solide 70 soit auto-entretenue, sans nécessité d'apport supplémentaire de comburant fluide. A l'inverse, le taux de comburant solide dans le premier bloc de propergol solide 60 est configuré de manière à ce que la combustion du premier bloc de propergol solide 60 ne soit pas auto-entretenue, et nécessite un apport supplémentaire de comburant fluide par les injecteurs 30.

Un procédé d'utilisation des blocs de propergol solide va maintenant être décrit.

L'allumeur 20 permet d'initier la combustion dans la chambre de combustion 10. La présence du comburant solide dans le deuxième bloc de propergol solide 70 permet un allumage uniforme de ce dernier. La présence de ce comburant solide en quantité importante permet en outre une poussée plus importante du moteur pour la phase d'allumage. Lorsque le deuxième bloc de propergol solide 70 est entièrement consumé, les injecteurs 30 sont alors découverts, et communiquent ainsi avec l'enceinte interne 12. Ils ont en outre pu être protégés des gaz de combustion pendant la combustion du deuxième bloc de propergol solide 70, en étant protégé par ce dernier. Par ailleurs, la présence des bouchons 33 empêchent les gaz de combustion de pénétrer dans les injecteurs 30, lorsque ces derniers se trouvent découverts.

Le premier bloc de propergol solide 60 est ensuite allumé par l'allumeur 20, de la même façon que le deuxième bloc de propergol solide 70. Afin de pouvoir entretenir sa combustion, du comburant fluide est également injecté dans l'enceinte interne 12 par l'intermédiaire des injecteurs 30. Pour ce faire, la vanne de régulation 44 est actionnée par l'intermédiaire d'une unité de commande (non représentée) de manière à permettre l'écoulement du comburant liquide depuis le réservoir pressurisé 40 jusqu'aux injecteurs 30. La pression exercée par le comburant liquide dans les injecteurs 30 permet l'éjection des bouchons 33, et donc l'injection du comburant liquide dans l'enceinte 12. Ainsi, la vanne de régulation 44 permet de réguler le débit d'injection, et donc de réguler le niveau de poussée du moteur 1 en fonction du débit d'injection du comburant liquide. Ainsi, à partir d'un niveau de poussée initial assuré par la présence du comburant solide dans le premier bloc de propergol solide 60, il est possible, en faisant varier le débit d'injection de comburant fluide, d'atteindre et de réguler la poussée du moteur 1 de manière optimale suivant le profil souhaité de la mission.

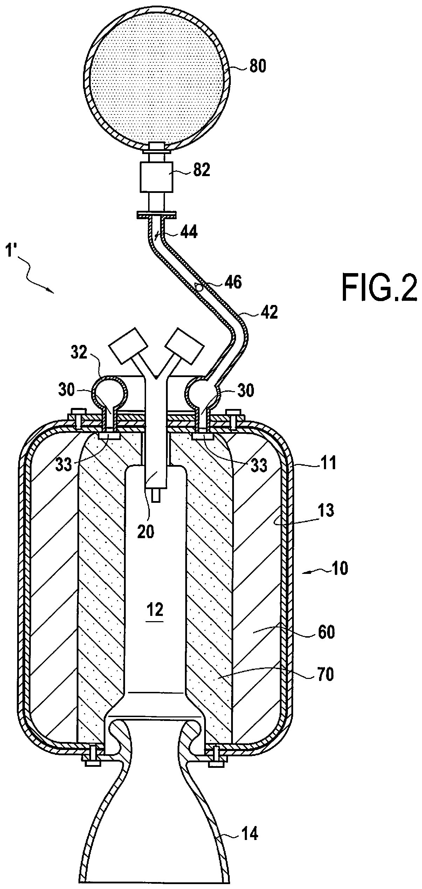

La figure 2 représente schématiquement un moteur fusée 1' selon un autre mode de réalisation de l'exposé. Selon ce mode de réalisation, le comburant fluide injecté dans l'enceinte 12 est un comburant gazeux. Le réservoir de comburant liquide du premier mode de réalisation est remplacé par un réservoir 80 permettant de stocker le comburant gazeux, et d'alimenter le tore d'injection 32, et donc les injecteurs 30, via une canalisation d'alimentation 42, la canalisation d'alimentation 42 étant en communication fluidique avec le réservoir 80 et le tore d'injection 32. Le réservoir 80 contenant le comburant gazeux est pressurisé, le gaz pressurisé s'écoulant depuis le réservoir jusqu'à la canalisation d'alimentation 42 par l'intermédiaire d'un détendeur 82, le détendeur 82 étant disposé en aval du réservoir 80 et en amont de la canalisation d'alimentation 42. Les autres éléments du moteur fusée 1' sont identiques à ceux du premier mode de réalisation, et ne seront pas décrits à nouveau.

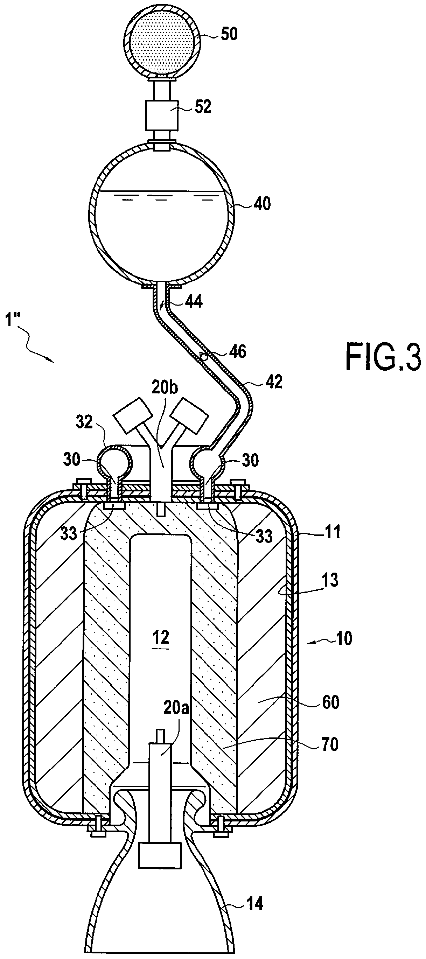

La figure 3 représente schématiquement un moteur fusée 1" selon un autre mode de réalisation de l'exposé. Dans ce mode de réalisation, le moteur fusée 1 comporte un premier allumeur 20b, et un deuxième allumeur 20a. Le premier allumeur 20b est disposé au niveau d'une partie de la paroi 11 opposée à la tuyère 14. En outre, le deuxième bloc de propergol solide 70 est disposé de manière à recouvrir le premier allumeur 20b, de la même manière que les injecteurs 30. Par conséquent, le premier allumeur 20b ne fait pas saillie dans l'enceinte interne 12, contrairement à l'allumeur 20 du premier mode de réalisation. En d'autres termes, le deuxième bloc de propergol solide 70 constitue une barrière thermique pour le premier allumeur 20b, protégeant ces derniers des gaz de combustion lors de l'allumage du moteur 1".

Le deuxième allumeur 20a est disposé dans la tuyère 14 et communique avec la cavité de l'enceinte interne 12 à travers la tuyère 14. Le deuxième allumeur 20a permet d'allumer le deuxième bloc de propergol solide 70 et d'initier la combustion de ce dernier. La pression générée par les gaz chauds issue de la combustion du deuxième bloc de propergol solide 70 permet l'éjection du deuxième allumeur 20a hors de la tuyère 14.

Le premier allumeur 20b permet d'allumer le premier bloc de propergol solide 60 et d'initier la combustion de ce dernier. En outre, le premier allumeur 20b est protégé par le deuxième bloc de propergol solide 70 lui-même pendant la combustion de ce dernier. Lorsque le deuxième bloc de propergol solide 70 est entièrement consumé, le premier allumeur 20b, ainsi que les injecteurs 30, sont alors découverts, et communiquent ainsi avec l'enceinte interne 12. Le premier allumeur 20b ne peut ainsi pas être détérioré par les gaz chauds issus de la combustion du deuxième bloc, et conserve donc ses capacités d'allumage pour le premier bloc. Les autres éléments du moteur fusée 1" sont identiques à ceux du premier mode de réalisation, et ne seront pas décrits à nouveau.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par exemple, bien que le mode de réalisation présenté en référence à la figure 3 est illustré avec un réservoir contenant un comburant liquide, ce mode de réalisation peut également s'appliquer au moteur illustré sur la figure 2, comportant un réservoir contenant du comburant gazeux. Par conséquent, la description et les dessins doivent être considérés dans un sens illustratif plutôt que restrictif.

## Revendications

1. Moteur fusée (1) comprenant :
- une chambre de combustion (10) débouchant sur une tuyère (14),
- au moins un premier bloc de propergol solide (60) disposé dans la chambre de combustion (10), le premier bloc de propergol solide (60) comprenant un carburant solide et un comburant solide,
- au moins un injecteur (30) configuré pour injecter un comburant fluide dans la chambre de combustion (10),
- un organe de régulation (44) pour réguler le débit d'injection de comburant fluide dans la chambre de combustion (10),
- un deuxième bloc de propergol solide (70) disposé dans la chambre de combustion (10) de telle sorte à définir une cavité (12) débouchant sur la tuyère (14), le premier bloc (60) étant encapsulé entre une paroi interne de la chambre de combustion (10) et le deuxième bloc de propergol solide (70), le premier bloc de propergol solide (60) présentant un taux de comburant solide plus faible que celui du deuxième bloc de propergol solide (70), le moteur fusée (1) étant **caractérisé en ce que** le deuxième bloc de propergol solide (70) est disposé de telle sorte à obturer le au moins un injecteur (30).

2. Moteur fusée (1) selon la revendication 1, dans lequel le taux de comburant solide dans le premier bloc de propergol solide (60) est déterminé de manière à ce que, après allumage du moteur (1), la combustion du premier bloc de propergol solide (60) soit auto-entretenue sans injection supplémentaire de comburant fluide dans la chambre de combustion (10).

3. Moteur fusée (1) selon la revendication 1, dans lequel le taux de comburant solide dans le premier bloc de propergol solide (60) est déterminé de manière à ce que, après allumage du moteur (1), la combustion du premier bloc de propergol solide (60) ne soit pas auto-entretenue sans injection supplémentaire de comburant fluide dans la chambre de combustion (10).

4. Moteur fusée (1) selon l'une quelconque des revendications 1 à 3, comportant un bouchon (33) configuré pour empêcher des gaz de combustion du deuxième bloc de propergol solide (70) de pénétrer dans l'injecteur (30), et pour être ouvert lorsqu'un comburant fluide est injecté à travers ledit injecteur (30).

5. Moteur fusée (1) selon l'une quelconque des revendications 1 à 4, comportant un premier allumeur (20b) disposé dans la paroi (11) de la chambre de combustion (10), le deuxième bloc de propergol solide (70) étant disposé de telle sorte à recouvrir le premier allumeur (20b), et un deuxième allumeur (20a) disposé dans la tuyère (14) et communiquant avec la cavité (12) à travers la tuyère (14).

6. Moteur fusée (1) selon la revendication 5, dans lequel le deuxième allumeur (20a) est configuré pour être éjecté du moteur (1) après allumage du deuxième bloc de propergol solide (70).

7. Moteur fusée (1) selon l'une quelconque des revendications précédentes, comprenant un canal d'alimentation (42) configuré pour alimenter l'injecteur (30) en comburant fluide sous forme liquide ou gazeuse, dans lequel le canal d'alimentation (42) comporte un clapet anti-retour (46) pour bloquer l'écoulement des gaz de combustion provenant de la chambre de combustion (10) à travers le canal d'alimentation (42).

8. Moteur fusée (1) selon la revendication 7, dans lequel le canal d'alimentation (42) comporte une vanne de régulation (44) disposée en amont du clapet anti-retour (46), la vanne de régulation (44) étant configurée pour réguler le débit d'injection de comburant fluide par l'injecteur (30).

9. Procédé d'utilisation d'un bloc de propergol solide comprenant un carburant solide et un comburant solide, le bloc de propergol solide étant un premier bloc (60) et étant disposé dans une chambre de combustion (10) débouchant sur une tuyère (14), un deuxième bloc de propergol solide (70) étant disposé dans la chambre de combustion (10) de telle sorte à définir une cavité (12) débouchant sur la tuyère (14), le premier bloc (60) étant encapsulé entre une paroi interne de la chambre de combustion (10) et le deuxième bloc de propergol solide (70), le premier bloc de propergol solide (60) présentant un taux de comburant solide plus faible que celui du deuxième bloc de propergol solide (70), et un comburant fluide étant injecté dans la chambre de combustion (10) par au moins un injecteur (30) à un débit souhaité, le deuxième bloc de propergol solide (70) étant disposé de telle sorte à obturer le au moins un injecteur (30).

## Patentansprüche

1. Raketenmotor (1), umfassend:
- eine Brennkammer (10), die sich zu einer Düse (14) öffnet,
- mindestens einen ersten Festtreibstoffblock (60), der in der Brennkammer (10) angeordnet ist, wobei der erste Festtreibstoffblock (60) einen festen Brennstoff und ein festes Oxidationsmittel umfasst,
- mindestens einen Injektor (30), der so konfiguriert ist, dass er ein fluides Oxidationsmittel in die Brennkammer (10) einspritzt,
- ein Regelelement (44) zum Regeln der Einspritzrate von fluidem Oxidationsmittel in die Brennkammer (10),
- einen zweiten Festtreibstoffblock (70), der in der Brennkammer (10) so angeordnet ist, dass er einen sich zur Düse (14) öffnenden Hohlraum (12) definiert, wobei der erste Block (60) zwischen einer Innenwand der Brennkammer (10) und dem zweiten Festtreibstoffblock (70) eingekapselt ist, wobei der erste Festtreibstoffblock (60) einen geringeren Gehalt an festem Oxidationsmittel aufweist als der zweite Festtreibstoffblock (70), wobei der Raketenmotor (1) **dadurch gekennzeichnet ist, dass** der zweite Festtreibstoffblock (70) so angeordnet ist, dass er den mindestens einen Injektor (30) verschließt.

2. Raketenmotor (1) nach Anspruch 1, wobei der Gehalt an festem Oxidationsmittel in dem ersten Festtreibstoffblock (60) so bestimmt ist, dass nach der Zündung des Motors (1) die Verbrennung des ersten Festtreibstoffblocks (60) ohne zusätzliche Einspritzung von fluidem Oxidationsmittel in die Brennkammer (10) selbsterhaltend ist.

3. Raketenmotor (1) nach Anspruch 1, wobei der Gehalt an festem Oxidationsmittel in dem ersten Festtreibstoffblock (60) so bestimmt ist, dass nach der Zündung des Motors (1) die Verbrennung des ersten Festtreibstoffblocks (60) ohne zusätzliche Einspritzung von fluidem Oxidationsmittel in die Brennkammer (10) nicht selbsterhaltend ist.

4. Raketenmotor (1) nach einem der Ansprüche 1 bis 3, aufweisend einen Stopfen (33), der so konfiguriert ist, dass er verhindert, dass Verbrennungsgase aus dem zweiten Festtreibstoffblock (70) in den Injektor (30) eintreten, und dass er geöffnet wird, wenn ein fluides Oxidationsmittel durch den Injektor (30) eingespritzt wird.

5. Raketenmotor (1) nach einem der Ansprüche 1 bis 4, aufweisend einen ersten Zünder (20b), der in der Wand (11) der Brennkammer (10) angeordnet ist, wobei der zweite Festtreibstoffblock (70) so angeordnet ist, dass er den ersten Zünder (20b) bedeckt, und einen zweiten Zünder (20a), der in der Düse (14) angeordnet ist und durch die Düse (14) mit dem Hohlraum (12) in Verbindung steht.

6. Raketenmotor (1) nach Anspruch 5, wobei der zweite Zünder (20a) so konfiguriert ist, dass er nach der Zündung des zweiten Festtreibstoffblocks (70) aus dem Motor (1) ausgeworfen wird.

7. Raketenmotor (1) nach einem der vorhergehenden Ansprüche, umfassend einen Zufuhrkanal (42), der so konfiguriert ist, dass er dem Injektor (30) fluides Oxidationsmittel in flüssiger oder gasförmiger Form zuführt, wobei der Zufuhrkanal (42) ein Rückschlagventil (46) zum Blockieren des Flusses von Verbrennungsgasen aus der Brennkammer (10) durch den Zufuhrkanal (42) aufweist.

8. Raketenmotor (1) nach Anspruch 7, wobei der Zufuhrkanal (42) ein Regelventil (44) aufweist, das stromaufwärts des Rückschlagventils (46) angeordnet ist, wobei das Regelventil (44) so konfiguriert ist, dass es die Einspritzrate des fluiden Oxidationsmittels durch den Injektor (30) regelt.

9. Verfahren zur Verwendung eines Festtreibstoffblocks, der einen festen Brennstoff und ein festes Oxidationsmittel umfasst, wobei der Festtreibstoffblock ein erster Block (60) ist und in einer Brennkammer (10) angeordnet ist, die sich zu einer Düse (14) öffnet, wobei ein zweiter Festtreibstoffblock (70) in der Brennkammer (10) so angeordnet ist, dass er einen sich zur Düse (14) öffnenden Hohlraum (12) definiert, wobei der erste Block (60) zwischen einer Innenwand der Brennkammer (10) und dem zweiten Festtreibstoffblock (70) eingekapselt ist, wobei der erste Festtreibstoffblock (60) einen geringeren Gehalt an festem Oxidationsmittel aufweist als der zweite Festtreibstoffblock (70), und ein fluides Oxidationsmittel durch mindestens einen Injektor (30) mit einer gewünschten Strömungsrate in die Brennkammer (10) eingespritzt wird, wobei der zweite Festtreibstoffblock (70) so angeordnet ist, dass er den mindestens einen Injektor (30) verschließt.

## Claims

1. A rocket motor (1) comprising:
- a combustion chamber (10) opening to a nozzle (14),
- at least one first block of solid propellant (60) positioned in the combustion chamber (10), the first block of solid propellant (60) comprising a solid fuel and a solid oxidizer,
- at least one injector (30) configured to inject a fluid oxidizer into the combustion chamber (10),
- a control member (44) for regulating the injection flow rate of fluid oxidizer into the combustion chamber (10),
- a second block of solid propellant (70) positioned in the combustion chamber (10) so as to define a cavity (12) opening to the nozzle (14), the first block (60) being encapsulated between an internal wall of the combustion chamber (10) and the second block of solid propellant (70), the first block of solid propellant (60) having a smaller solid oxidizer concentration than that of the second block of solid propellant (70), the rocket motor (1) being **characterized in that** the second block of solid propellant (70) is positioned so as to obturate the at least one injector (30).

2. The rocket motor (1) according to claim 1, wherein the solid oxidizer concentration in the first block of solid propellant (60) is so determined that, after ignition of the motor (1), the combustion of the first block of solid propellant (60) is self-maintained without supplementary injection of fluid oxidizer into the combustion chamber (10).

3. The rocket motor (1) according to claim 1, wherein the solid oxidizer concentration in the first block of solid propellant (60) is so determined that, after ignition of the motor (1), the combustion of the first block of solid propellant (60) is not self-maintained without supplementary injection of fluid oxidizer into the combustion chamber (10).

4. The rocket motor (1) according to any one of claims 1 to 3, including a stopper (33) configured to prevent the combustion gases of the second block of solid propellant (70) from penetrating into the injector (30), and to be opened when a fluid oxidizer is injected through said injector (30).

5. The rocket motor (1) according to any one of claims 1 to 4, including a first igniter (20b) positioned in the wall (11) of the combustion chamber (10), the second block of solid propellant (70) being positioned in such a manner as to cover the first igniter (20b), and a second igniter (20a) positioned in the nozzle (14) and communicating with the cavity (12) through the nozzle (14).

6. The rocket motor (1) according to claim 5, wherein the second igniter (20a) is configured to be ejected from the motor (1) after ignition of the second block of solid propellant (70).

7. The rocket motor (1) according to any one of the preceding claims, comprising a feed channel (42) configured to feed the injector (30) with fluid oxidizer in the liquid or gaseous state, in which the feed channel (42) includes a check valve (46) to block the flow of combustion gases from the combustion chamber (10) through the feed channel (42).

8. The rocket motor (1) according to claim 7, wherein the feed channel (42) includes a control valve (44) positioned upstream of the check valve (46), the control valve (44) being configured to control the injection flow rate of fluid oxidizer by the injector (30).

9. A method for using a block of solid propellant comprising a solid fuel and a solid oxidizer, the block of solid propellant being a first block (60) and being positioned in a combustion chamber (10) opening to a nozzle (14), a second block of solid propellant (70) being disposed in the combustion chamber (10) in such a manner as to define a cavity (12) opening to the nozzle (14), the first block (60) being encapsulated between an internal wall of the combustion chamber (10) and the second block of solid propellant (70), the first block of solid propellant (60) having a smaller solid oxidizer concentration than that of the second block of solid propellant (70), and a fluid oxidizer being injected into the combustion chamber (10) by at least one injector (30) at a desired flow rate, the second block of solid propellant (70) being positioned in such a manner as to obturate the at least one injector (30).
